# DEMANDE DE BREVET EUROPEEN

(11) **EP 0 550 322 A1**
(43) Date de publication de la demande: **07.07.1993**
(21) Numéro de dépôt: 92403494.5
(22) Date de dépôt: 21.12.1992
(51) Int. Cl.: G11B 5/127, G11B 5/235

(54) **Procédé de fabrication de tête magnétique pour couches à hauts champs coercitifs**

(30) Priorité: 31.12.1991 FR 9116387
(71) Demandeur: COMPAGNIE EUROPEENNE DE COMPOSANTS ELECTRONIQUES LCC, F-92400 Courbevoie (FR)
(72) Inventeur: Chabrolle, Jacques, F-92402 Courbevoie Cedex (FR)
(74) Mandataire: Guérin, Michel

(57) **Abrégé**

La présente invention concerne un procédé de fabrication de têtes magnétiques pour pistes magnétiques à hauts champs coercitifs et hautes fréquences d'utilisation.

Il s'agit d'un procédé de fabrication de têtes magnétiques comportant un circuit en matériau magnétique (2, 5) autour duquel est ou sont enroulée(s) une ou plusieursbobine(s) (6) et possédant une zone très fine appelée entrefer d'un matériau non magnétique caractérisé en ce qu'il comporte des étapes de :
- rectification plane,
- usinage, dépôt d'un matériau non magnétique, assemblage deux à deux des bandes (1),
- refroidissement et remplissage par une résine adhésive du tube obtenue,
- rectification cylindrique puis polissage,
- tronçonnage des blocs afin d'obtenir les faces actives élémentaires,
- mise en place de la seconde partie du circuit de fermeture (5) et encapsulation.

La présente invention s'applique à la fabrication de têtes magnétiques telles que celles utilisées dans la monétique,. l'informatique ou le contrôle de ticket magnétique.

## Description

La présente invention concerne un procédé de fabrication de tête magnétique pour couches magnétiques à hauts champs coercitifs.

Une tête magnétique est constituée d'un circuit en matériau magnétique passant au travers d'une bobine. Une petite section de ce circuit appelée entrefer est constituée d'un matériau non magnétique. Ainsi, lorsqu'un courant passe dans la bobine, le champ magnétique H créé dans le circuit magnétique génère de part et d'autre de l'entrefer des fuites h du champ H dues à la non-perméabilité du matériau constituant l'entrefer. Cette fuite h est utilisée pour magnétiser localement un matériau magnétique perméable (piste ou bande magnétique) en contact ou très proche de l'entrefer. Les informations ainsi obtenues sur une piste magnétique dépendent de la fréquence du courant passant dans la bobine et de la vitesse de défilement de la piste magnétique. Inversement, on peut relire des informations enregistrées selon le principe précédemment décrit sur une piste magnétique en la faisant défiler sur une telle tête magnétique. On peut aussi effacer toute trace magnétique sur une piste en y appliquant un champ alternatif suffisamment puissant.

Ce principe trouve de nombreuses applications pratiques (enregistrement sonore ou vidéo, carte de crédit ou magnétique, ticket de transport, disquette informatique, etc... ) tant en mode digital dans lequel les informations inscrites sur la piste magnétique sont constituées par une succession de petits aimants tous identiques et plus au moins espacées les uns des autres, qu'en mode analogique dans lequel les informations sont sous forme d'une induction variable.

En mode digital, il faut pour pouvoir inscrire une information sur la couche du matériau magnétique lui appliquer un champ suffisamment important (de l'ordre de 2 ou 3 fois le champ coercitif Hc du matériau magnétique) afin de porter son induction à saturation (induction de saturation du matériau : Bs) ; la valeur de l'induction Br (pour l'induction remanente) restant dans la couche magnétique ainsi que l'induction de saturation Bs et le champ coercitif Hc sont donnés par le cycle d'Hystérésis caractérisant le matériau de la piste magnétique.

Dans les applications pratiques de l'enregistrement et de la lecture magnétique, il convient que l'information enregistrée ne puisse être effacée facilement. Ce problème de sécurité est particulièrement aigu dans le monétique. Or, il suffit que soit appliqué un champ magnétique ayant une valeur trois à quatre fois supérieure à celle du champ coercitif du matériau de la piste magnétique pour que l'information soit éliminée. Pour éviter ce genre d'accident, il convient d'utiliser des matériaux qui aient un cycle d'hystérésis pour lequel le champ coercitif Hc est élevé. On considère par exemple qu'un champ coercitif de 5000 à 6000 oe est suffisant. Cependant, pour pouvoir inscrire une information sur un tel support magnétique, il faut pouvoir lui appliquer un champ très important puisqu'il doit être égal à trois ou quatre fois la valeur du champ coercitif du matériau utilisé comme piste magnétique. Soit, dans l'exemple cité plus haut, le champ appliqué doit avoir une valeur de 18000 à 20000 oe.

Un nouveau problème se pose alors. Pour avoir une bonne densité d'information sur une piste magnétique, il faut que l'entrefer de la tête magnétique soit de très petite dimension. En effet, pour pouvoir lire des informations digitales avec la même tête magnétique que celle qui les a inscrites, il faut que la longueur ε de l'entrefer non magnétique soit telle que ε < 1/4 T, T étant la longueur d'onde la plus petite que l'on veut lire. Ainsi, une grande densité d'information impose une épaisseur d'entrefer très petite (de l'ordre du micron).

Or, ces dimensions associées à la section de l'entrefer que "voie" le champ magnétique H (quelques milliers de micron²) ont pour conséquence que la valeur h du champ fuyant qui inscrit l'information sur la piste magnétique peut être dix fois plus petite que celle du champ induit H par la bobine dans le circuit. Ce qui fait que, par exemple, pour avoir un champ de fuite de 18000 à 20000 oe il faut appliquer au circuit un champ magnétique de 180000 A 200000 oe. Mais pour de telle valeur pouvant être supérieure à 200000 oe, on risque de saturer le matériau magnétique utilisé pour le circuit lui-même qui possède lui aussi un cycle d'hystérésis et donc une induction de saturation Bs, avant même de saturer la piste magnétique. Par exemple la ferrite couramment utilisée possède une induction de saturation Bs de 0,5 tesla et, pour de telles valeurs du champ appliqué H, est saturée avant que ne le soit la piste magnétique. On ne peut donc pas avec une tête en ferrite, inscrire une information sur des pistes magnétiques ayant un champ coercitif Hc de l'ordre de 5000 à 6000 oe. Il faut donc trouver, pour pouvoir lire et écrire une forte densité d'information sur un matériau magnétique à haut champ coercitif, un compromis entre les dimensions de l'entrefer, la densité d'informations écrites et lues, et le matériau utilisé pour le circuit magnétique.

La présente invention a résolu ces problèmes par un choix judicieux d'alliages métalliques pour le matériau constituant le circuit magnétique de la tête par rapport aux dimensions de l'entrefer qui a une épaisseur comprise entre quelques microns et 0,1 micron.

La présente invention concerne un procédé de fabrication d'une telle tête magnétique comportant un circuit en matériau magnétique obtenu à partir de deux bandes de matériau magnétique autour duquel est ou sont enroulées une ou plusieurs bobines et possédant une très fine zone appelée entrefer, d'un matériau non magnétique caractérisé en ce qu'il comporte les étapes suivantes :
- usinage d'une face de chacune des deux bandes de manière à obtenir un profil en creux donnant à chacune des deux bandes un profil de type catamaran comportant deux patins ;
- dépôt sur au moins une des deux faces usinées d'une couche mince d'un matériau non magnétique, l'épaisseur totale de la couche déposée correspondant à celle de l'entrefer ;
- assemblage des deux bandes, les patins en regard les uns des autres, puis mise sous presse de l'ensemble et élévation de la température dudit four, jusqu'à la température de fusion du matériau déposé ;
- et après refroidissement, un remplissage par une résine adhésive du tube obtenu.

La présente invention concerne aussi un procédé équivalent utilisant, non pas le dépôt d'une couche mince, mais deux fines lames métalliques de matériau non magnétique, interposées entre les patins des bandes de matériau magnétique.

L'avantage de ces procédés est qu'ils sont aisés de mise en oeuvre et qu'ils permettent d'obtenir avec une très grande précision les dimensions désirées pour l'entrefer.

Outre la possibilité d'enregistrer un grand nombre d'informations, un avantage de la présente invention est la très bonne résistance à l'usure de par la forme de la face active (face qui est en contact avec la piste magnétique) et de la forme particulière du circuit magnétique.

L'invention sera mieux comprise et des avantages supplémentaires apparaîtront à la lecture de la description qui va suivre accompagnée des figures suivantes :
- la figure 1, 2, 3, 4 et 5 représente les différentes phases du procédé de fabrication selon la présente invention,
- la figure 6 représente la dernière phase de fabrication de la tête magnétique selon la présente invention, et
- la figure 7 représente un perfectionnement du procédé de fabrication d'une tête magnétique selon la présente invention.

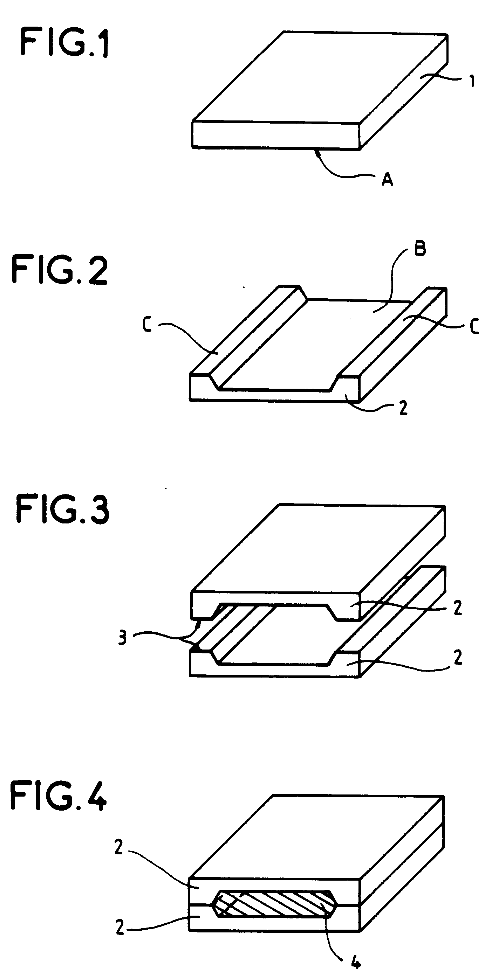

Sur la figure 1 est représentée une bande parallélépipédique 1 support d'une partie du futur circuit magnétique, en alliage métallique tel que du fer-nickel, du cobalt-vanadium, du fer-nickel-chrome, du fer-nickel-molybdène, du fer-nickel-chrome-vanadium, du fer-silicium ou du fer-cobalt. De très bonnes performances sont obtenues avec un alliage fer-nickel comprenant 52% de fer et 48% de nickel. Cette bande 1 a pour largeur environ 20 mm, pour longueur environ 50 à 60 mm et pour épaisseur environ 2 à 3 mm. D'autres compositions ou dimensions peuvent être exploitées pour une tête magnétique réalisée selon la présente invention. Un nombre paire de ces bandes 1 sont l'objet d'une rectification plane constituant la première étape du procédé de fabrication sur leurs 6 faces afin que ces bandes aient toutes exactement les mêmes côtes dimensionnelles.

La seconde étape du procédé de fabrication représentée sur la figure 2, consiste à usiner une des grandes faces A de chacune de ces bandes 1, de manière à obtenir un profil en creux B de forme trapézoïdale ou rectangulaire donnant à chacune des plaques un profil de type catamaran. Le profil représenté sur la figure 2 n'est pas limitatif, d'autres profils peuvent être envisagés mais à condition toutefois de laisser deux petits patins C dans le même plan. Ces deux patins C ainsi définis sur la figure 2 sont polis afin d'obtenir un état de surface aussi fin que possible.

Sur la figure 3, sont représentées deux bandes 1 munies d'un profil selon la figure 2 sur la face usinée desquelles a été déposée une couche mince 3 de matériau non magnétique. Ceci constitue la troisième étape du procédé de fabrication. Ce matériau non magnétique peut être un verre, du dioxyde de silicium, du bronze au beryllium ou tous matériaux susceptibles d'accepter ultérieurement une refusion. Suivant la nature des couches et l'épaisseur de celles-ci, on utilise pour le dépôt des couches minces 3 des techniques comme la pulvérisation cathodique, l'évaporation, le pistolet ou la torche plasma. L'épaisseur du dépôt sur chaque bande 1 est choisie de telle sorte qu'elle corresponde à environ la moitié de l'entrefer mécanique souhaité pour les têtes magnétiques fabriquées par le présent procédé.

Une variante du procédé de fabrication selon l'invention peut être de déposer une couche mince sur la face usinée de la moitié des bandes 1 et sur une épaisseur correspondant à celle de l'entrefer. Ces bandes seront ensuite assemblées avec les autres bandes deux à deux.

La figure 4 représente le résultat de la quatrième étape du procédé de fabrication qui est celle de l'assemblage deux à deux des bandes métalliques 1 traitées, les patins C en regard les uns des autres. Il est alors nécessaire de vérifier le parfait alignement des deux bandes de telle manière qu'il y ait un très bon recouvrement des zones 3 ayant reçu le revêtement. L'ensemble est alors placé entre les poinçons d'une presse, elle-même installée dans un four. L'opération suivante consiste à élever la température du four, tandis que l'assemblage est mis entre les poinçons d'une presse. La température (typiquement supérieure à 1000 °C) et la pression sont choisies en fonction de la nature du matériau déposé pour obtenir la refusion de celui-ci et du matériau de la bande métallique - notamment de leur coefficient de dilatation linéaire respectif - ainsi que l'épaisseur de la zone non magnétique. On obtient, après refroidissement et extraction des pièces à présent assemblées entre elles par la couche non magnétique homogène emprisonnée entre les patins, un tube creux de périmètre extérieur rectangulalre et de section intérieure en forme de losange aplati.

La cinquième étape du procédé de fabrication consiste à remplir avec une 'résine adhésive de type époxy après obturation de l'une des extrémités, le creux du tube. Cette opération est destinée à améliorer la solidité de l'assemblage compte tenu de la faible surface des patins C.

La résine utilisée est choisie de telle sorte qu'après polymérisation, elle soit suffisamment dure et homogène pour accepter des opérations d'usinage telles que tronçonnage, rectification, polissage etc...

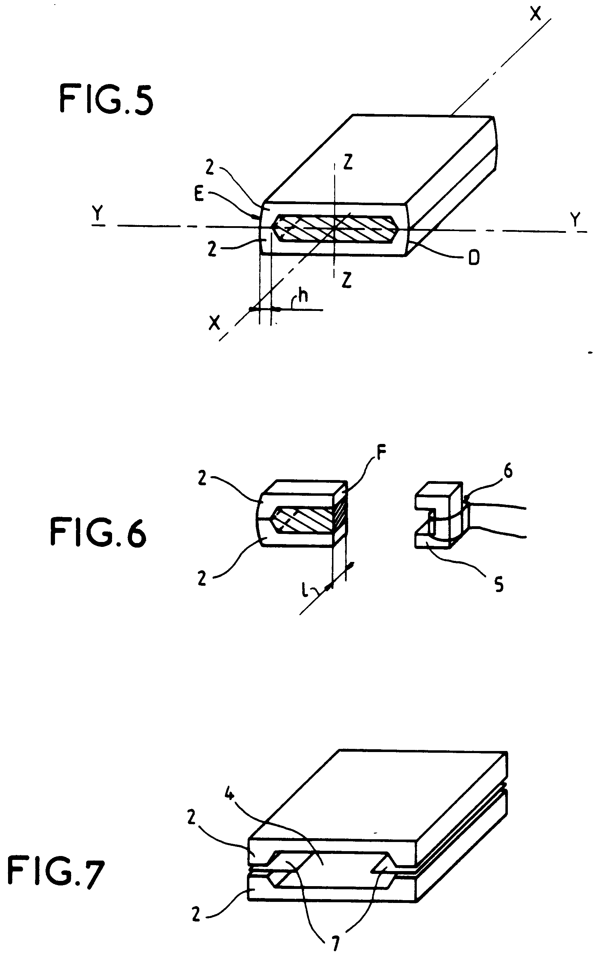

Les blocs ainsi obtenus font l'objet, au cour de la sixième étape du procédé de fabrication représentée par la figure 5, d'une opération de rectification cylindrique puis de polissage au niveau des faces latérales E et D constituant les petits côtés extérieurs du bloc rectangulaire de la figure 4. Pour cette opération de rectification cylindrique et de polissage, le centre du rayon coïncide ou non avec l'axe transversale Y de l'assemblage, c'est-à-dire que l'entrefer sera au sommet de l'arrondi si le rayon coïncide avec l'axe Y ou décalé sinon. Les génératrices des zones rectifiées cylindriquement doivent être parfaitement parallèles à l'axe central longitudinal X du tube ainsi obtenu.

La forme arrondie des faces actives ainsi obtenues ont une très bonne résistance à l'usure, mais ces faces actives peuvent avoir n'importe qu'elle autre forme.

La profondeur de rectification et de polissage permet d'obtenir avec précision la hauteur h correspondant à un côté de la section de l'entrefer que "verra" le champ induit par la bobine dans le circuit magnétique de la tête magnétique terminée.

La septième étape du procédé de fabrication représentée par la figure 6, consiste en une opération de tronçonnage des blocs.

Un premier tronçonnage est effectué suivant l'axe central longitudinal X dans un plan perpendiculalre au plan de l'assemblage X Y. Cette opération permet d'obtenir deux éléments identiques dans lesquels vont être extraites les faces actives élémentaires. Les faces brutes F tronçonnées sont alors rectifiées finement, voire polies, afin d'assurer ultérieurement un très bon contact avec le circuit magnétique de fermeture 5 supportant la ou les bobines 6.

Après cette opération, une nouvelle opération de tronçonnage est effectuée sur chaque demi bloc parallèlement au plan Y,Z afin d'obtenir les faces actives élémentaires. Le pas de ce tronçonnage est déterminé par la largeur de travail de la face active, c'est-à-dire la zone de contact directe ou non avec la piste magnétique.

Après ces opérations de tronçonnage et de polissage, la huitième étape consiste dans la mise en place de la seconde partie 5 du circuit magnétique constitué par le même matériau métallique que celui des bandes 1, du même type ou en ferrite, et supportant la ou les bobines 6. Lorsque la largeur 1 de la face active le permet, le circuit de fermeture (la seconde partie 5 du circuit magnétique) est rapporté sur l'arrière de celui-ci, dans le cas contraire, il est mis en place sur une des faces latérales de la face active parallèle au sens d'utilisation de la tête.

La tête magnétique est finalement mise dans un boîtier pour la protéger et lui permettre d'être manipulée.

Ce procédé de fabrication est spécialement destiné à la réalisation de têtes magnétiques équipées de très petits entrefers (de quelques dixièmes de microns à quelques microns). Lorsque les entrefers sont par exemple plus grand que 6 à 10 microns, il est possible d'éviter l'opération de dépôt en procédant de la façon suivante :

La figure 7 représente une variante du procédé de fabrication précédent. Il s'agit, en l'occurence, après avoir effectué les deux premières étapes du procédé de fabrication précédent, d'interposer entre les patins C de deux bandes 1 usinées, deux lames métalliques 7, non magnétiques, constituées par un matériau du type de ceux utilisés dans le procédé de fabrication précédent et dont l'épaisseur correspond à l'entrefer désiré mais sans liaison entre elles.

L'ensemble est alors placé entre les poinçons d'une presse, une résine adhésive du même type que celle utilisée dans le premier procédé de fabrication est introduite dans le trou central afin d'assurer la cohésion des deux bandes après polymérisation de la résine à température ambiante. Cette opération pourrait être faite en température compte-tenu du fait que la résine a un cycle de polymérisation alors plus court.

Cette opération étant exécutée, la sixième, septième et huitième étape déjà décrites dans le procédé de fabrication selon l'invention, peuvent être mises en oeuvre jusqu'à l'obtention des têtes magnétiques terminées.

Il est bien évident que certaines étapes de ce procédé de fabrication peuvent être facultatives, tout dépend de la qualité et de la précision désirées.

De telles têtes magnétiques trouvent de multiples applications de lecture et d'écriture de pistes magnétiques devant conserver d'une manière sûre une grande densité d'informations, notamment comme celles utilisées dans la monétique, l'informatique ou le contrôle de ticket magnétique.

## Revendications

1. Procédé de fabrication d'une tête magnétique comportant un circuit en matériau magnétique (2, 5) obtenu à partir de deux bandes (1) de matériau magnétique autour duquel est ou sont enroulées une ou plusieurs bobines (6) et possédant une très fine zone appelée entrefer, constituée par un matériau non magnétique caractérisé en ce qu'il comporte les étapes suivantes :
- usinage d'une face (A) de chacune des deux bandes (1) de manière à obtenir un profil en creux (B) donnant à chacune des deux bandes un profil de type catamaran comportant deux patins (C),
- dépôt sur chacune des faces usinées (A) d'une couche mince (3) d'un matériau non magnétique, l'épaisseur totale de la couche (3) déposée correspondant à celle de l'entrefer désiré,
- assemblage des deux bandes (1), les patins (C) en regard les uns des autres, puis mise sous presse de l'ensemble et élévation de la température dudit four jusqu'à la température de fusion du matériau déposé (3),
- après refroidissement, remplissage par une résine adhésive du tube obtenu.

2. Procédé de fabrication d'une tête magnétique selon la revendication 1 caractérisé en ce que la couche (3) du matériau non magnétique est déposée sur chacune des faces usinées (A) des deux bandes (1).

3. Procédé de fabrication d'une tête magnétique selon la revendication 1, caractérisé en ce que la couche (3) du matériau non magnétique est déposée sur la face usinée (A) d'une des deux bandes (1).

4. Procédé de fabrication d'une tête magnétique selon l'une quelconque des revendications 1 à 3, caractérisé en ce que le matériau non magnétique déposé est du type verre, dioxyde de silicium, bronze au bérylium ou tout autre matériau susceptible d'accepter ultérieurement une refusion.

5. Procédé de fabrication d'une tête magnétique selon l'une quelconque des revendications 1 à 4, caractérisé en ce que l'épaisseur totale de la couche mince (3) de matériau non magnétique sur la face usinée (A) d'au moins une des deux bandes (1) est comprise entre quelques microns et un dixième de micron.

6. Procédé de fabrication d'une tête magnétique comportant un circuit en matériau magnétique (2, 5) obtenu à partir de deux bandes (1) de matériau magnétique, autour duquel est ou sont enroulées une ou plusieurs bobines (6) et possédant une zone très fine appelée entrefer constitué par un matériau non magnétique, caractérisé en ce qu'il comporte les étapes suivantes :
- usinage d'une face (A) de chacune des deux bandes (1) de manière à obtenir un profil en creux (B) donnant à chacun des deux bandes un profil de type catamaran comportant deux patins (C),
- interposition de lames métalliques (7) sans liaison entre elles entre les parties (C) en regard les unes des autres de chacune des deux bandes (1) usinées,
- mise sous presse et introduction dans le creux central de l'ensemble d'une résine adhésive et polymérisation de ladite résine.

7. Procédé de fabrication d'une tête magéntique selon la revendication 6 caractérisé en ce que l'épaisseur des lames métalliques non magnétiques (7) est comprise entre 1 micron et 100 microns.

8. Procédé de fabrication d'une tête magnétique selon l'une quelconque des revendications 1 à 7 caractérisé en ce qu'il comporte, de plus, une première étape de rectification plane des bandes (1) parallélépipédiques en alliage métallique.

9. Procédé de fabrication d'une tête magnétique selon l'une quelconque des revendications précédentes caractérisé en ce qu'il comprote, de plus ,les dernières étapes suivantes :
- rectification cylindrique et polissage des faces latérales (D,E) de telle sorte que les génératrices de la surface cylindrique obtenue soient parallèles du plan (X, Y) des patins (C),
- tronçonnage du bloc obtenu suivant l'axe central longitudinal (X) dans un plan perpendicualaire au plan d'assemblage (X, Y), polissage des faces obtenues (F) et tronçonnage perpendiculairement à l'axe longitudinal (X) du bloc,
- mise en place de la seconde partie (5) du circuit magnétique comportant la ou les bobines (6) sur les faces arrières (F) ou sur les côtés des blocs obtenus, et encapsulation de l'ensemble dans un boîtier protecteur.

10. Procédé de fabrication d'une tête magnétique selon l'une quelconque des revendications 1 à 9, caractérisé en ce que les alliages métalliques constituant les bandes (1) sont des alliages métalliques du type : fer-nicker-chrome, fer-nickel-molybden, fer-nickel-chrome-molybden, fer-nickel-chrome-vanadium, fer-silicium, fer-colbat, cobalt-vanadium ou fer-nickel.

11. Procédé de fabrication d'une tête magnétique selon l'une quelconque des revendications 1 à 10 caractérisé en ce que les alliages métalliques constituant les bandes (1) sont du type fer-nickel, dans les proportions de, environ 52 % de fer et environ 48 % de nickel.

12. Procédé de fabrication d'une tête magnétique selon la revendication 9 caractérisé en ce que la rectification cylindrique et le polissage sont tels que le centre du demi cercle coïncide avec l'axe transversale (Y) de l'assemblage.

13. Procédé de fabrication d'une tête magnétique selon la revendication 9, caractérisé en ce que la rectification cylindrique et le polissage sont tels que le centre du demi-cercle en coïncide pas avec l'axe transversal (Y) de l'assemblage.

14. Procédé de fabrication d'une tête magnétique selon l'une quelconque des revendications 1 à 13, caractérisé en ce que les bandes parallèlépipédiques initiales (1) ont pour largeur environ 20 mm, pour longueur environ 50 à 60 mm et pour épaisseur environ 2 à 3 mm.

15. Procédé de fabrication d'une tête magnétique selon l'une quelconque des revendications 1 à 14 caractérisé en ce que le profil en creux (B) obtenu par usinage d'une face (A) de chacune des bandes (1) est de forme trapézoïdale ou de tout autre forme.
